**Europäisches Patentamt**

**European Patent Office**

**Office européen des brevets**

(19)

(11) **EP 1 280 080 A1**

(12) **EUROPEAN PATENT APPLICATION**

(43) Date of publication:
29.01.2003 Bulletin 2003/05

(51) Int Cl.$^7$: **G06F 17/60**, H04M 3/54

(21) Application number: **01306427.4**

(22) Date of filing: **26.07.2001**

| (84) Designated Contracting States:<br>**AT BE CH CY DE DK ES FI FR GB GR IE IT LI LU<br>MC NL PT SE TR**<br>Designated Extension States:<br>**AL LT LV MK RO SI** | (72) Inventor: **The designation of the inventor has not<br>yet been filed** |
| :-- | :-- |
| (71) Applicant: **BRITISH TELECOMMUNICATIONS<br>public limited company<br>London EC1A 7AJ (GB)** | (74) Representative: **Lloyd, Barry George William et al<br>BT Group Legal Services,<br>Intellectual Property Department,<br>8th Floor, Holborn Centre,<br>120 Holborn<br>London EC1N 2TE (GB)** |

(54) **Method and apparatus for modelling user behaviour**

(57)     Embodiments of the invention are concerned with providing a method of modelling user behaviour for use in predicting user actions in respect of an event, where a user action is one of a predefined set of actions. An event may be, for example, receipt of a phone call from a caller, in which case the user action is one of answer call, or divert call to voicemail.

The method comprises the steps of:

identifying one or more user characteristics;
creating a user model comprising at least one of the identified user characteristics;
for the or each identified user characteristic:

receiving data relating to an event;

inputting the received data to one or more rules associated with the identified characteristic;
processing the or each rule, thereby generating an output representative of a user action;
combining outputs to generate a predicted action associated with the user;

comparing the predicted action with an observed user action in respect of the event; and
modifying the user model in accordance with a result of the comparison.

Thus rather than using an attribute/value representation, a user model representation is used to predict user actions.

Fig 3

**Description**

The present invention relates a method of modelling user behaviour, and is particularly suited to modelling behaviour that has a set of well-defined user actions associated therewith.

In the field of user modelling, a significant amount of research and development has been directed towards improving the way in which information is identified for, and presented to, users. In particular, user modelling is concerned with the way in which content of information is identified to be of interest to a user; how information (of interest) is delivered to a user; and the way in which interface devices interact with a user when providing the user with information. More recently, user modelling has additionally concentrated on adapting user models in response to changing user behaviour.

The applications of user modelling are vast, and include identifying and conveying information and goods of interest to a user; identifying and conveying entertainment, such as television programmes and music, of interest to a user; and identifying areas where users need assistance. User modelling has also been applied to machine co-ordination; for example, the latest Volkswagen Beetle™ uses fuzzy logic control programs, which constantly monitor the current speed and use of the accelerator pedal, in its automatic gearbox. These programs classify the driver with a degree of sporty-ness, and adjust the car's gear-changing behaviour accordingly.

Several .techniques have been developed to improve ways in which information is identified to be of interest to a user. These include user profiling (enabling information content to be *personalised* to suit the user's interests) and clustering (collaborative filtering based on likes and dislikes of users).

Concurrently, techniques have been developed to improve interaction between a user and devices. One such technique is the Bayesian model, which attempts to identify a user's goals based on the user's observed actions and queries. An example of a product that embodies such a technique is the Microsoft™ Office Assistant™, which aims to provide appropriate help to a user, and to identify and remedy gaps in the user's knowledge. Another technique is that of expert systems, where an expert model of use of, say, a software package, is derived, and user models (based on observed user behaviour) are compared to the expert model.

Techniques for adapting user models in response to changing user behaviour include machine learning methods, where a user model is typically represented as a set of attribute-value pairs. Machine learning is based on observed data, and includes methods such as rule-based knowledge learning and neural networks. A problem with neural networks is that the network appears to an onlooker as a "black box", so that it is almost impossible to identify any kind of logic, or rule set, that governs the extrapolation behaviour of the neural network. For this reason, rule-based methods are preferred (rules can more easily be reviewed and modified). However, a problem with rule-based methods is that it can be extremely difficult to extract the relational and background knowledge that is required to formulate the rules in the first instance.

An alternative method is a relational learning method known as inductive logic programming, which derives rule-sets from observed data. Typically a significant amount of data is required as input, and the learning process is a formidable search task.

Most of these machine learning methods require a relatively large, static set of training examples to train a model. The incorporation of new training examples normally involves restarting the learning process with a new, expanded, training set. As the learning process is typically quite slow, this is clearly undesirable. Additionally in user modelling it is relatively expensive to gather training data, as explicit feedback is required from the user.

According to a first aspect of the invention there is provided a method of modelling user behaviour for use in predicting user actions in respect of an event, where a user action is one of a predefined set of actions. The method comprises the steps of:

identifying one or more user characteristics;
creating a user model comprising at least one of the identified user characteristics;
for the or each identified user characteristic:

receiving data relating to an event;
inputting the received data to one or more rules associated with the identified characteristic;
processing the or each rule, thereby generating an output representative of a user action;
combining outputs to generate a predicted action associated with the user; comparing the predicted action with an observed user action in respect of the event; and
modifying the user model in accordance with a result of the comparison.

Thus rather than using an attribute/value representation, a user model representation is used to predict user actions.

Preferably the user model comprises probabilities associated with the or each identified user characteristic, and modifying the user model comprises modifying the probabilities in accordance with the comparison. Alternatively the user model comprises probability intervals associated with the or each identified user characteristic, so that modifying the user model comprises modifying the probability intervals in accordance with the comparison. Probability intervals are particularly suited to user modelling, as they remove a need for assumptions relating to the action being modelled.

In some embodiments of the invention there are two or more rules associated with a user characteristic, so that the step of processing rules includes combining output from the said two or more rules in accordance with a predetermined functional relationship so as to generate an output representative of user action in respect of the user characteristic.

Advantageously an event includes receipt of a phone call from a caller, and the user action is one of answer call, or divert call to voicemail. Conveniently the received data includes data representative of a user's schedule, and the rules include a rule for determining availability of user during a defined period.

In addition, or alternatively the rules include a rule for determining immediacy of an interaction between caller and user, where the interaction can be one or both of a meeting or/ and a phone call.

Preferably the received data includes data relating to telephone calls between the caller and user, and the rules include a rule for determining length of telephone calls received from caller during a time period. In addition, or alternatively the rules can include a rule for determining a number of calls made by the caller to the user during a time period.

Advantageously the rules utilise fuzzy logic expressions.

Embodiments of the invention can additionally be applied to receipt of email messages, scheduling tasks into a diary, and programming of devices.

In the context of embodiments of the present invention, a "user" is not necessarily limited to a human entity, as it may include a piece of equipment or some software.

Further aspects and advantages of the present invention will be apparent from the following description of preferred embodiments of the invention, which are given by way of example only and with reference to the accompanying drawings, in which

Figure 1 is a schematic diagram of a general purpose computer operable to store and process embodiments of the invention;

Figure 2 is a schematic diagram showing software components that can interoperate with embodiments of the invention;

Figure 3 is a schematic diagram of components of a response predictor according to embodiments of the invention;

Figure 4 is a flow diagram showing a method of modelling user behaviour according to embodiments of the invention;

Figure 5a is a flow diagram showing aspects of the method of Figure 4;

Figure 5b is a flow diagram showing further aspects of the method of Figure 4;

Figure 5c is a flow diagram showing yet further aspects of the method of Figure 4;

Figure 6 is a schematic diagram showing a functional relationship utilised by the method of Figure 4;

Figure 7 is a schematic diagram showing a further functional relationship utilised by the method of Figure 4; and

Figure 8 is a flow diagram showing the ways in which incoming calls are processed and recorded.

Overview of operating environment for embodiments of the invention

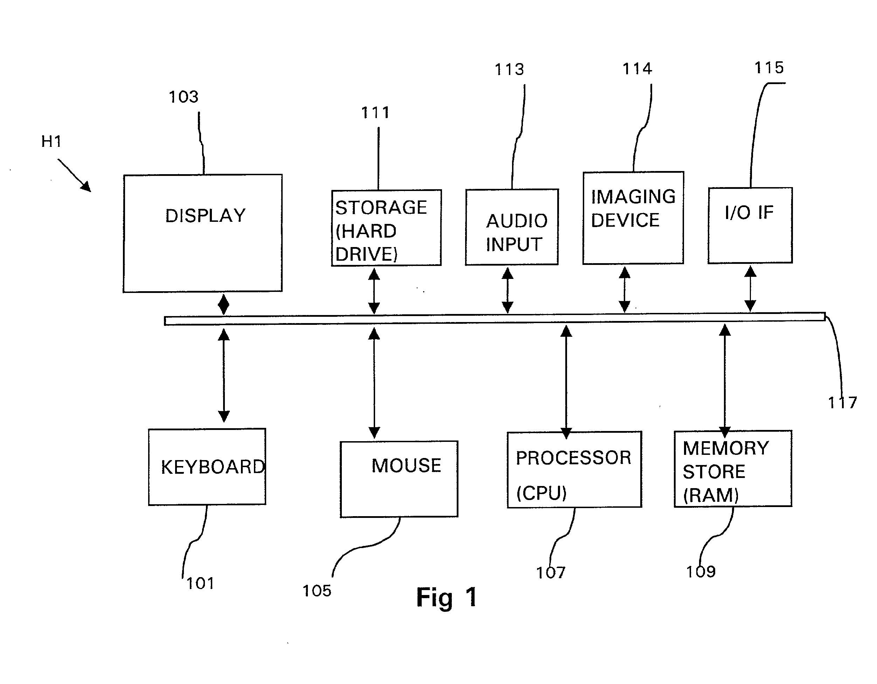

Figure 1 shows a generally conventional computer system H1 that comprises: a conventional keyboard 101; a display screen 103, such as a CRT or plasma screen; a mouse 105; a processor (CPU) 107 such as a Pentium ™ processor; a memory store 109; data storage 111; and input/output interfaces 115 to connect the workstation to a local area network (LAN) and wider area networks (WAN) such as the internet, to facilitate data exchange including email messaging with remote users connected to such networks. The interface 115 also allows control of a plain old telephone set (POTS) and the components shown in Figure 1 are interconnected by a common bus 117. In addition to the single system configuration shown in Figure 1, several computer systems (not shown) may be interconnected over a local area network via the input/output interface 115.

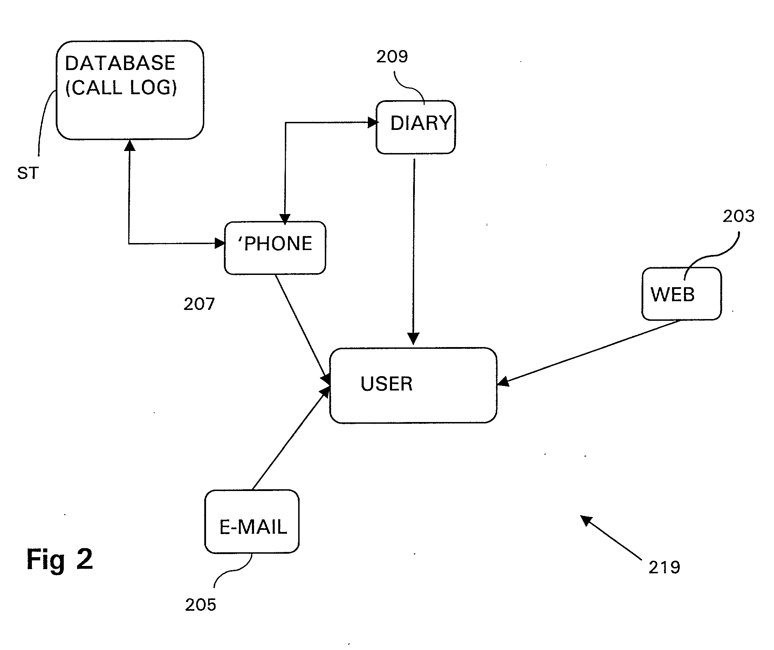

In a conventional manner, under control of operating system programs 121 (shown in Figure 2), the processor 107 runs programs held on storage 111, making use of the memory store 109, under the control of keyboard 101 and mouse 105, together with imaging device 114 to provide data on the display 103. Audio inputs can be made through the audio input 113 for use by speech recognition software.

Referring also to Figure 2, an intelligent assistant system 219 may be stored on the storage 111 for processing by the processor 107. The intelligent assistant system 219 enables users to devote their time to complex tasks while the system 219 takes some decisions on behalf of the user based on previous observations of the user, thus enabling the user to increase productivity. Typical tasks to be performed by the system include time, information and communication management. When the computer system comprises several computer workstations, interconnected via the input/output interface 115, several intelligent assistant systems 219 may be active and may communicate with one another.

As shown in Figure 2, such a system 219 may comprise a set of autonomous systems 203, 205, 207, 209, generally referred to as agents or assistants, specialising in various tasks such as diary management, telephone call filtering and email prioritisation, web search and telephone directory enquiry:

System 203 comprises a web assistant for browsing the World Wide Web. The web assistant develops an interest model of the users interests and preferences, using intelligent reasoning techniques. This is described in more detail in British Telecom Technical Journal (BTTJ) Vol. 16, No. 3, July 1998, "The Personalisation of Agent Services" S. Soltysiak et al pp 110-117;

System 205 comprises an email assistant for email management;

System 207 comprises a telephone assistant, which determines whether a call should be answered immediately, or whether the call may be postponed to a later time or date.

System 209 comprises a diary assistant, which accepts diary entries entered by a user;

Each agent has its own interface and interacts with the user in its own particular way, and the agents communicate with one another by message passing. These agents are essentially reactive agents that respond to events in the user's environment (such as emails and telephone calls) and initiate interactions with the user.

As stated above, these agents 203, 205, 207, 209 perform tasks on behalf of the user. This means that at least some of the agents will have to perform some degree of user modelling in order to behave in a manner that typifies user actions and retrieves information that is relevant to the user.

In particular, with one of the known methods described above, prediction of user response to, say, an incoming call, could involve the telephone assistant 207 consulting a user profile. A user profile defines attribute/value relationships, so that the telephone assistant 207 would typically firstly determine the attribute (caller), then identify a corresponding value from the user profile, and finally perform an action based on the identified value. For example, if the caller is identified to be the user's wife, the value (action) could be "answer", whereas if the caller is identified to be someone from the administration department at work, the value (action) could be "send to voicemail".

A problem with this approach is that it does not take any account of the user's state of mind or of current activities. It may be that the user is trying to complete a report, for which there is a deadline of 6:00 pm that evening; in this situation, the user is unlikely to want to be interrupted by a call from anyone.

User profiles could of course be modified to include filters such as "if the user is busy, divert the call", but this incurs additional processing and will only work if there is a filter to match every possible activity that the user may be engaged in; furthermore, user profiles cannot attempt to factor in the state of mind of the user.

Embodiments of the present invention move away from attribute/value representations and instead utilise a user model to predict user actions, as is described in more detail below. In general, embodiments are suitable for predicting one of a well-defined set of user actions, such as, in the case of a user receiving a telephone call, either answering the call, or not answering the call.

Overview of embodiments of the invention

A first embodiment of the invention can be used to predict user response to incoming telephone calls. Essentially the first embodiment involves training a user model using data representative of previously received phone calls. The data includes at least caller details, the context of user at the time of receiving the call, and the way in which the user handled the call (i.e. answer, divert to voicemail).

Training of the model has the objective of replicating observed user characteristics so that the model can thereafter be used to predict user response, and thus manage incoming phone calls. The user model comprises a plurality of programs representative of user characteristics - such as busy, talkative, antisocial etc. Each of the characteristics has a "behaviour" associated therewith - e.g. if a user is deemed to have the *characteristic* "antisocial", then this is coupled with a *behaviour* of "never answers calls".

Training a user model involves inputting data thereto and, for each of the calls, determining likely behaviour of the user in respect of the call. Firstly the identity of the caller is determined. Secondly the context of the user, at the time of the call, is determined - e.g. from consulting the user's diary it can be determined that the user was in a meeting, or was free at the time of the call; and thirdly the caller identity and user context is input to the user model (specifically to programs representative of the user characteristics mentioned above), to determine likely behaviours of the user.

Once the likely behaviours have been determined, they are used to identify whether, on a balance of probabilities, the user would have answered, or otherwise, the call. As will be described below, this is compared with how the user actually handled that call, and used to update the user model.

Once the model has been trained it can be continually modified, using real-time data.

Advantages of the invention arise from the way in which the user model operates: as the model can change each time a new observation is made, it does not require lengthy re-training phases. This is an improvement over most of the so-called machine learning systems, which require an initial training phase and are then static unless complex retraining takes place. In addition, and as a consequence, the model effectively adapts to reflect the user's changing, or unchanging, method of responding to telephone calls.

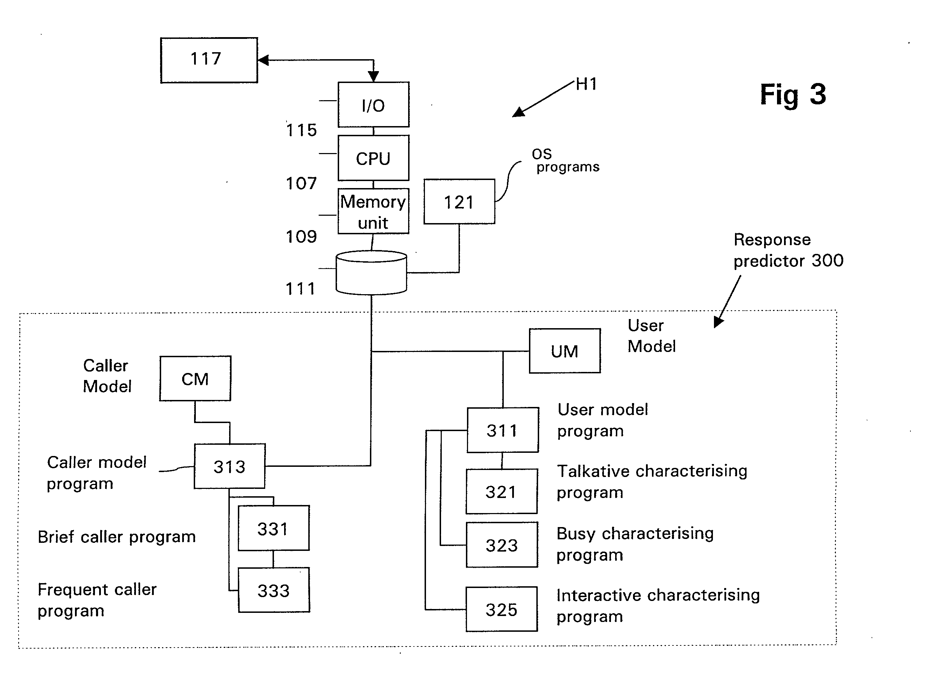

Referring to Figure 3, the first embodiment will be described in more detail. Generally embodiments of the invention are referred to as a response predictor 300, and comprise at least some of programs 311, 313, 321, 323, 325, 331, 333. Preferably the response predictor 300 forms part of the telephone assistant 207, and as such is stored on storage 111, and is processable by the processor 107.

The programs include a user model program 311, which comprises a model UM of the user, together with plurality of characterising programs 321, 323, 325 each of which determines a behaviour of the user.

The programs additionally include a caller model program 313, which comprises models $CM_i$ of each caller (i), together with plurality of caller programs 331, 333 each of which maintains data relating to calls received from callers.

At least some of the characterising programs 321, 323, 325 request and receive information from various sources, such as a caller database ST (shown in Figure 2), and the diary assistant 209, and each of the characterising programs 321, 323, 325 generates, as output, a value indicative of a probability of the user behaving in a particular manner.

For example, one of the characterising programs 321 identifies whether the user can be characterised as talkative, another 323 whether the user can be characterised as busy. For the talkative characterising program 321, the program 321 has a static output of "always answers". For the busy program 323, the program 323 identifies, based on information gathered from the various sources, whether the user is free, or busy, and outputs a value representative of a probability that the user is busy.

The store ST includes information (such as caller details and duration of calls) corresponding to the previously received calls.

The user model program 311 receives, from each characterising program, output indicative of behaviour corresponding thereto, and updates the user model UM in accordance with how closely the output behaviour matches the actual behaviour recorded for that call, which is also available from the store ST.

At least some of the caller programs 331, 333 request and receive information from various sources, such as the caller database ST, and maintain a record of e.g. call types, duration and frequency, in order to generate an output indicative of how well a caller conforms to a caller type.

For example, one of the caller programs 331 identifies whether the caller can be described as brief, another 333 whether the user can be described as frequent. For the brief caller program 331, the program 331 has an output of "always makes short calls to the user". For the frequent caller program 333, the program 333 identifies, based on information gathered from the store ST, whether the caller calls the user on a regular basis, and outputs a value indicative of the likelihood that the caller is a frequent caller.

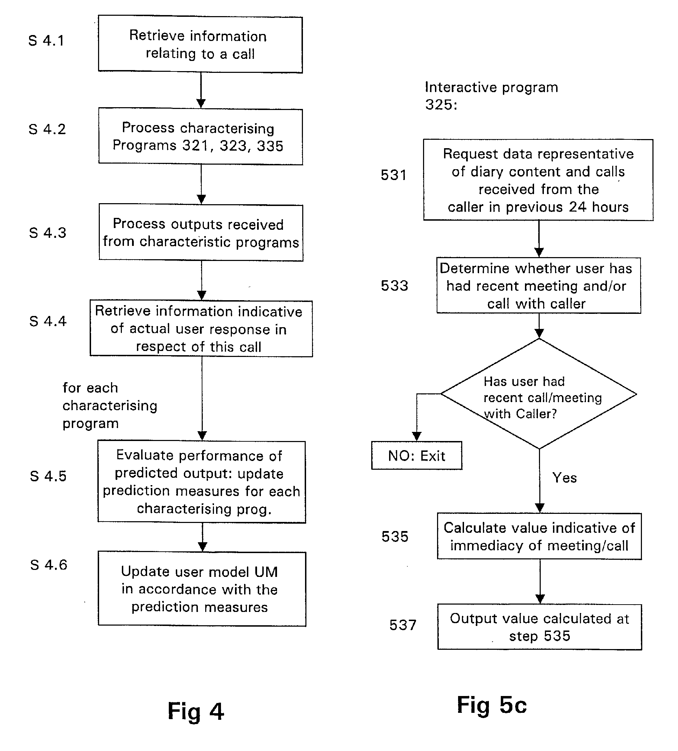

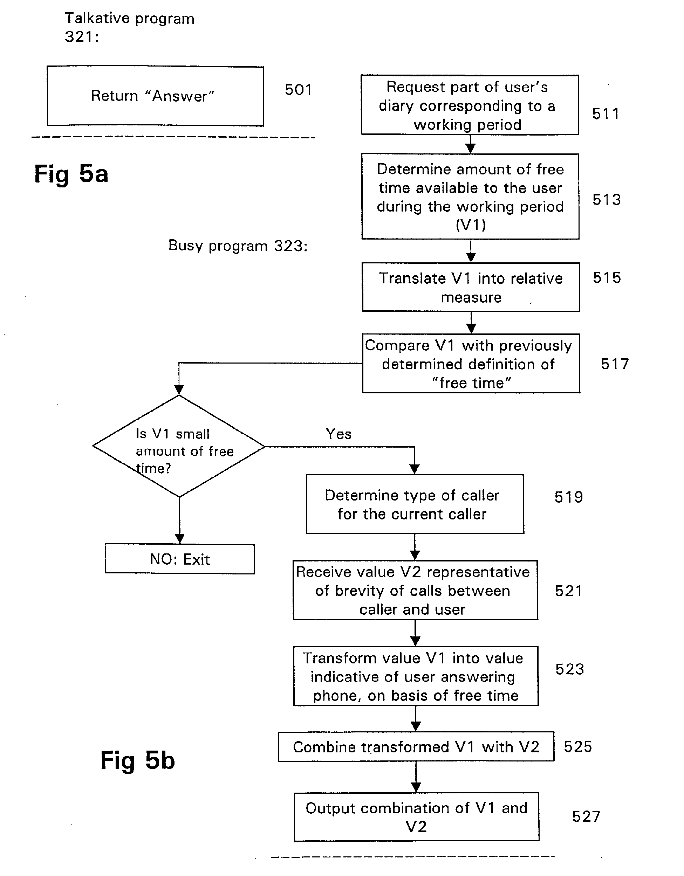

The operation of the response predictor 300, when training the user model UM according to this first embodiment of the invention, will now be described with reference to the flowcharts shown in Figures 4, 5a, 5b and 5c.

Training of the user model UM involves use of call data that has already been seen and stored in the store ST, or equivalent, such as a log file (not shown). Typically training is based on calls received over a few days, taking account of the user's diary record over those few days (e.g. by accessing information maintained by the diary assistant 209).

The user model UM is most easily described by way of example. As stated above, a user model program 311 includes programs, each representative of a user characteristic, some of which have been mentioned above, but which generally include at least talkative, antisocial, busy, overloaded, interactive, regular, selective and prioritising.

Examples of some of the user characteristics and behaviours corresponding thereto are defined in Table 1:

Table 1

| Characteristic | Description | Data required | Behaviour |
|---|---|---|---|
| Talkative | User prefers to answer all calls | None - static | Always answers |
| Antisocial | User doesn't like to answer calls | None - static | Never answers |
| Busy | User has small proportion of free time in working day | Diary entries during time period T (configurable); Information relating to caller | Answer if call is likely to be short |

Table 1   (continued)

| Characteristic | Description | Data required | Behaviour |
|---|---|---|---|
| Overloaded | User has small proportion of free time in working day | Diary entries during time period T (configurable) | Never answers |
| Interactive | User has had a recent call or meeting with caller | Diary entries during time period T (configurable); call log | Answers |
| Regular | User handles a large proportion of calls at this time of day | Call log | Answers |

The user model includes a value for each of the characteristics, which indicates a measure of the number of times, or a likelihood, that the behaviour of the user has conformed to that characteristic.
e.g. suppose the current user model UM is:

talkative : 0.7
antisocial : 0.3
busy : 0.8
interactive : 0.6

This says that in 70% of cases so far, behaviour has conformed to the talkative characteristic (i.e. the call has been answered), in 30% of cases behaviour has conformed to the antisocial characteristic (not answered). (NB this is a probability distribution because these two are mutually exclusive and exhaustive i.e. one or the other is always true, never both).

In cases where the busy characteristic is applicable, this says that the user model UM correctly predicts user behaviour 80% of the time (the busy characteristic is only applicable when there is a *small proportion* of free time in a specified period (as described below)). In cases where the interactive characteristic is applicable, this says that the user model UM correctly predicts user behaviour 60% of the time (the interactive characteristic is only applicable when the user has recently been in contact with the caller (as described below)).

The user model UM is updated by the user model program 311, which, at step S 4.1 retrieves information relating to a call. This includes retrieving time of the call, together with the identity of the caller from the store ST.

At step S 4.2 each of the characterising programs 321, 323, 325 etc is processed. At least some of the characterising programs request information representative of diary information and caller details, and these programs process the information in accordance with internal routines. The operation of some of the characterising programs is shown in Figures 5a, 5b and 5c - for the talkative, busy and interactive characterising programs 321, 325, 327.

Referring to Figure 5a, at step 501 the talkative program 321, when activated, simply returns "answer".

Referring to Figure 5b, at step 511 the busy characterising program 323 requests part of the user's diary corresponding to a working period (which is configurable and may, for example, be defined as working hours in a 24 hour period surrounding the time of the call), and receives it. At step 513 the busy characterising program 323 determines the amount of free time that was available to the user during the working period (V1).

At step 515 the busy characterising, program 323 translates this amount of free time into a relative measure by dividing number of unoccupied working hours by available working hours and, at step 517 compares this with a previously determined definition of "free time". E.g. assuming the busy characterising program 323 calculates the amount of free time, V1, to be 13% and the definition of a "small amount of free time" is having less than 10-15 % (fuzzy number) free time, such a value (13%) constitutes a small amount of free time.

As stated above, the busy characterising program 323 only generates an output in cases where there is a small amount of free time. If the amount of free time were more than the fuzzy definition of a "small amount of free time" (here 10-15%), the user is not deemed to have been busy, and the busy characterising program 323 exits without generating an output.

As a value of 13% does fall within the fuzzy definition of a "small amount of free time", the busy characterising program 323 proceeds to the next step 519, where the busy characterising program 323 determines the type of caller for the current caller (caller A). Preferably this includes accessing information stored by the caller model CM, in particular information available from the caller programs 331, 333.

Information relating to length of calls is maintained by the brief caller program 331 (described below), so that at step 519 the busy characterising program 323 sends a request to the brief caller program 331, with an identification of the caller (caller A), for a measure of the brevity of phone calls between caller A and the user.

At step 521 the brief caller program 331 sends a value, V2, representative of the proportion of calls received from caller A that are short to the busy characterising program 323; for the present example, assume that a value of 1.0 is sent (V2 = 1.0).

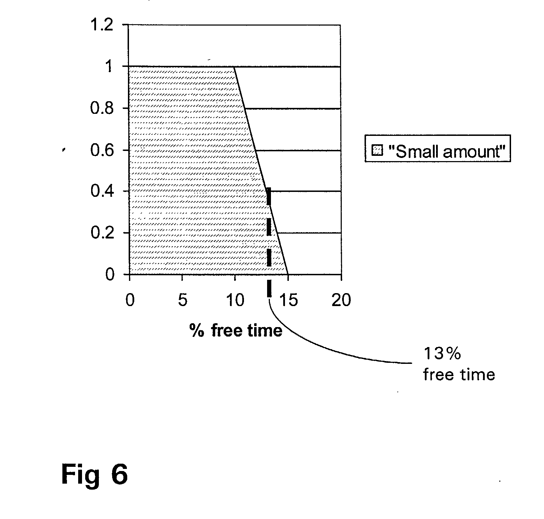

At step 523 the busy characterising program 323 transforms V1 (13%) into a likelihood that the user will answer the phone, given the amount of free time available to the user. Preferably this transformation involves use of a fuzzy function, such as that shown in Figure 6, from which it can be derived that 13% free time maps to 0.4% probability of answering the phone.

At step 525 the busy characterising program 323 combines the probability value derived at step 523 with the value 1.0 returned from the brief caller program 331 so as to further factor in the brevity of the caller. This gives a probability of 0.4 x 1.0 = 0.4% that the user will answer the phone.

At step 527 the busy characterising program 323 outputs the value calculated at step 525 (0.4) to the user model program 311.

Referring to Figure 5c, at step 531 the interactive characterising program 325 receives an input representative of the identity of the caller, and requests, from the store ST, data representative of the number of calls received from the caller in, say, a 24 hour period preceding the current call. In addition the interactive characterising program 325 requests part of the user's diary corresponding to a working period (e.g. 24 hour period, but this is configurable), and receives it. At step 533 the interactive characterising program 325 works out whether the user has had a recent meeting and/or call with the caller.

For example, when the interactive characterising program 325 receives information relating to the user's diary, it determines the time of last meeting, and calculates the time since that meeting. If the meeting was more than, say, 24 hours ago, the user is not deemed to have had a recent meeting with the user, and the interactive characterising program 325 exits without generating an output. However, if the last meeting was less than 24 hours ago, the interactive characterising program 325 calculates, at step 535, a value indicative of how recent the meeting ) was - e.g. using a logarithmic function or similar. This calculated value is essentially a measure of the likelihood that the user will answer the call, given the immediacy of the last interaction with the caller. At step 537 the interactive characterising program 325 outputs the value calculated at step 535.

As an alternative, if the user has both had a recent meeting, and received one or more phone calls from the caller during the 24 hour period, the value outputted by the interactive characterising program 325 can be higher than if the user has either had a recent meeting with, or taken at least one call from, the caller.

Once all of the characterising programs 321, 323, 325 have been processed, the user model program 311 updates the user model UM in accordance with the outputs from the characterising programs 321, 323, 325.

Thus at step S 4.3 the user model program 311 processes the outputs received from the characteristic programs 321, 323, 325: e.g. say the user model program 311 receives the following outputs (example values):

from the talkative program 321: answer

from the busy program 323: answer with probability 0.4

from the interactive program 325: n/a for this call

The user model program 311 calculates the probability of the user performing one of two actions - answer or divert to voicemail - by performing a weighted sum of the contributions to the two actions:

answer = Average {1.0*previous value for talkative characteristic + 0.4*previous value for busy characteristic + 0.0*previous value for interactive characteristic}

$$= \text{Average} \{0.7 + 0.4 * 0.8\} \cong 0.5$$

voicemail = 1.0*previous value for antisocial characteristic

$$=0.3$$

Which gives, as output, a weighting towards action "answer".

At step S 4.4 the user model program 311 retrieves information from the store ST indicative of the actual user response in respect of this call. If the action derived at step S 4.3 replicates the actual user response, then the user model program 311 subsequently updates the user model UM (steps S 4.5 and S 4.6).

At step S 4.5 the user model program 311 firstly evaluates and records, for each characterising program, the performance of its predicted behaviour. This can comprise modifying, prediction measures (e.g. prediction measure$_{talkative}$), which represent the proportion of times that a respective characterising program correctly predicts the user action, and which are maintained by the user model program 311.

At step S 4.6, the user model program 311 updates the user model UM in accordance with the prediction measures in the following manner:

talkative : 0.7 + prediction measure$_{talkative}$

antisocial : 1.0 - talkative

busy : 0.8 + prediction measure$_{busy}$

interactive : 0.6 + prediction measure$_{interactive}$

As stated above, the caller model program 331 maintains a caller model CM for each of the callers from which the user receives calls.

Essentially a caller model CM comprises programs, each representative of a caller characteristic, some of which have been mentioned above, but which generally include at least brief, verbose, frequent, reactive, proactive. Examples of caller characteristics and descriptions corresponding thereto are given in Table 2:

Table 2

| Characteristic | Description |
|---|---|
| Brief | always makes *short* calls to user |
| Verbose | always makes *long* calls to user |
| Frequent | calls user *frequently* |
| Reactive | calls following a *recent* voicemail left by user |
| Proactive | calls *prior* to a meeting with user |

In general, each of the caller programs 331, 333 etc. records statistics relating to calls - e.g. brief caller program 331 records a proportion of "short" calls made from the caller to the user, and frequent caller program 333 records a proportion of calls made over a defined period.

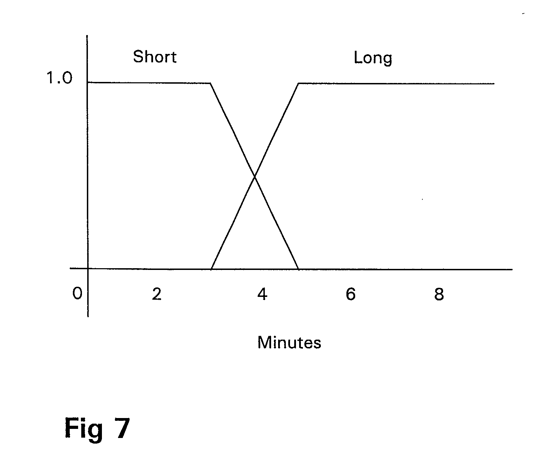

In each of these programs, fuzzy terms are used to define the respective conditions: "short", "long", "frequently", "recent" and "prior". These are internally defined within each of the programs, and are configurable. For example "short" and "long" calls may be defined using the fuzzy function shown in Figure 7, and "frequently" can be defined using a fuzzy function (not shown) defined as {0:0, 1:0, 2:0.5, 3:0.8, ....}, which states that receipt of 0, 1, 2, 3 calls have fuzzy values of 0, 0, 0.5 and 0.8 respectively.

Operation of these caller programs is most easily explained by an example: assume that calls from caller A (referred to in busy characterising program 323 described above) are recorded in the call log ST as follows:

Table 3

| Caller | Length min | direction | action | day | month | start hr | start min | start sec |
|---|---|---|---|---|---|---|---|---|
| A | 2.1 | in | answer | 23 | 7 | 9 | 16 | 44 |
| A | 1.1 | in | answer | 23 | 7 | 15 | 16 | 22 |
| A | 0.9 | in | answer | 23 | 7 | 15 | 22 | 00 |

The data from Table 3 is input to the fuzzy function shown in Figure 7, and the fuzzy relationship defined above for "frequency" to determine, respectively, a probability that the caller is brief caller and a probability that the caller is a frequent caller. Using this data, the caller model would be

8

Brief 1.0       i.e. all calls have been short
Verbose 0.0      i.e. no calls have been long
Frequent 0.8      i.e. probability that caller is a frequent caller is 0.8

(If the lengths of calls vary between 2 and 8 minutes, and can thus be defined as a mixture of "short" and "long" calls, an average call length can be calculated and used to identify a probability of the caller being brief, or verbose from Figure 7).

Clearly the period set to assess length of calls - "minutes" in Figure 7 - could be varied, to suit the environment being modelled.

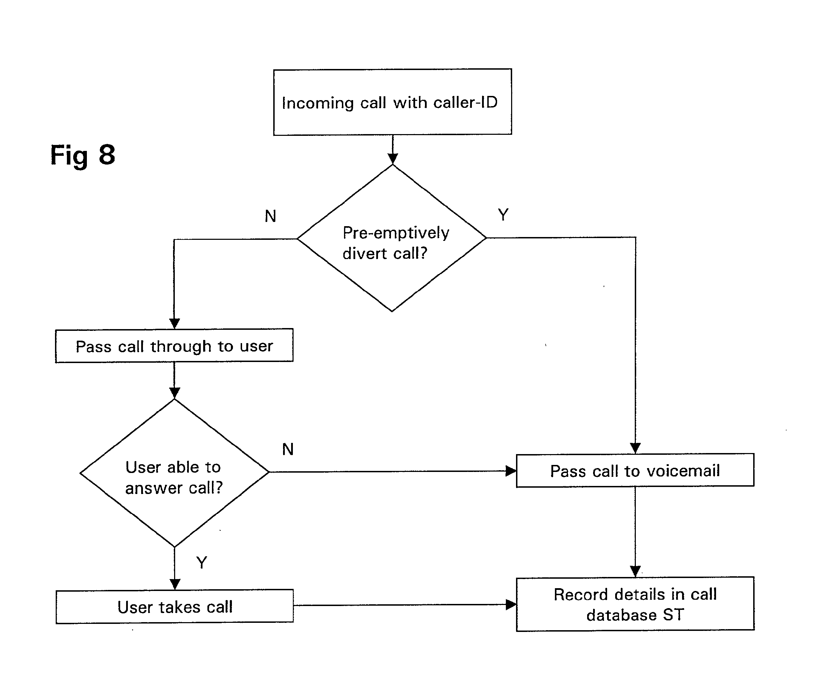

Once the caller model CM has been trained for this caller, and is in use for real data, the caller model CM is updated using the said real data. Preferably such real data is stored in the store ST, from which it is accessed by the caller programs 331, 333 etc (this is described below, with reference to Figure 8).

If a call is received from a new caller, a caller model CM corresponding to the new caller is created and initialised to:

Brief (0 1)      (i.e. probability that the caller makes short calls lies between 0 and 1)
Verbose (0 1)
Frequent (0 1)

and is subsequently modified using data corresponding to calls received from the new caller as described above for Caller A. Note that this makes use of probability intervals rather than point values; this representation is described in more detail below.

Once the user model UM has been trained it can be used to pre-emptively determine whether the user should answer an incoming call, in which case it allows the user's telephone to ring; or whether to divert the incoming call, in which case it diverts the call to voicemail. Alternatively it can allow all incoming calls to ring and offer a suggestion to the user. The suggestion is either that the user should answer the call, or leave the call, in which case the call will be diverted to voicemail. The benefit of the latter arrangement is that the user model UM can continually be updated using this data - i.e. the user model UM can offer a suggestion, which is a prediction within the meaning of step S 4.3 in Figure 4, and compare that suggestion with the actual user behaviour, which is actual behaviour within the meaning of step S 4.4 in Figure 4.

**Additional details and modifications**

The call database ST is populated with information relating to call duration, caller ID, and actions taken in respect of the call. Caller ID is typically derived from the Call Line Identifier (CLI) of the incoming call. The call database ST preferably stores a mapping between CLI and user details (including, e.g. phone numbers for home, work, mobile etc.), which enables a caller to be identified using the CLI.

Figure 8 is a flow diagram showing possible ways in which a user can receive an incoming call; as can be seen in the Figure, information relating to calls is stored in the call database ST after the call has ended.

Other embodiments

The response predictor 300 described above could be modified to predict how a user would handle incoming emails, how a user would schedule, e.g. meetings in his diary, and how a user would filter Short Message Service (SMSs) messages. In addition, the response predictor 300 can be modified to perform automatic video recording of programmes that are regularly viewed by a user.

When used to predict how a user would handle incoming emails, in one embodiment, the response predictor 300 could be used to train a user model UM to filter emails as a function of priority: thus into categories read now, read later, read never. The user model program 311 could use previous email data to train the user model UM, as described above, but whereas for the first embodiment the response predictor 300 can be trained to generate one of two actions (answer, do not answer), with email, there may be (at least) three categories (read now, later, never).

New callers

As stated above, when a user receives a call from a new user, the caller model program 313 can create a new caller model CM for that caller, and initialise all of the caller programs to zero. As an alternative, and if information about the new caller is available, (e.g. interests and/or habits that correlate with telephone preferences), the caller model program 313 could perform clustering between this information and similar information stored relating to existing callers, to identify existing callers that are similar to the new caller. The caller model program 313 could then create a partial caller model CM from that of the identified existing caller(s).

Information gathering

In the above examples, the busy and interactive characterising programs 323, 325 request information relating to the user's schedule from the diary assistant 209 (or equivalent), and these characterising programs 323, 325 use that information to calculate, e.g. amount of free time available to the user. Alternatively, the diary assistant 209 could be responsible for calculating the amount of free time available to the user, and could simply return a value indicative thereof to a respective characterising program.

As a further alternative, rather than the characterising programs communicating directly with the diary assistant 209 (or equivalent), embodiments could include an information-gathering program (not shown) whose job it is to periodically collect schedule information from various information sources - e.g. the diary assistant 209. In such an arrangement, the characterising programs would request information directly from the information-gathering program. This method would be particularly useful if information were to be gathered from additional sources such as e.g. GPS - for position and movement data etc., where synchronising of data feeds may be more conveniently handled by a central program.

General calculation details

In the example of the user model UM given above, the user model UM utilises point values to describe how well a characteristic represents a user's behaviour (talkative: 0.7; antisocial: 0.3; busy: 0.8; interactive: 0.6). As shown above in the caller model CM example, the user model UM could alternatively use intervals. This removes a need for assumptions, and implicitly factors in uncertainty, which is particularly useful for user modelling.

The use of intervals can be exemplified by the following example: if an even number is showing on a die, there is zero probability of the number being 1, 3 or 5, and the probability of the number being 2 (or 4 or 6) is somewhere in the interval 0-1, subject to the condition that Pr(2) + Pr(4) + Pr(6) = 1. Alternatively, this can be expressed by saying that the probability of being in the set {2,4,6} is 1.

If using point-valued probabilities, the probabilities would be expressed, respectively, as Pr(2) = 1/3, Pr(4) = 1/3, Pr(6) = 1/3. Expressing probabilities using the point-value method assumes that there is a fair die i.e. that there are equal prior probabilities.

If the probability is expressed over interval values, reduces the need for prior assumptions. This is particularly useful in modelling user response, which does involve making assumptions and working with a significant amount of uncertainty.

Thus the user model UM described above as

    talkative : 0.7
    antisocial : 0.3
    busy : 0.8
    interactive : 0.6

      could alternatively be expressed as:

    talkative : (0.6 0.8)
    antisocial : (0.2 0.4)
    busy : (0.75 0.85)
    interactive : (0.4 0.8)

As described above, when identifying whether the user has a "small amount" of time free, the busy characterising program 323 reviews the user's diary over a specified period, and derives a discrete amount of time when the user appears to be unoccupied. The busy characterising program 323 then compares this derived discrete data with fuzzy conditions (e.g."small amount" of free time).

However, this presupposes that diary entries are always "firm" entries - ie. entries for which the user has a definite engagement. In many cases, a user's diary may comprise at least some tentative diary entries, such as "possible meeting with Boss", so that the busy characterising program 323 is unable to determine the exact amount of free time in the user's diary - i.e. it cannot determine that the user has exactly 13% free time.

In such a situation the busy characterising program 323 determines an approximate amount of free time e.g. *"about* 13% free time", and includes means, such as semantic unification means, to enable the busy characterising program 323 to process this fuzzy amount of time in the context of fuzzy conditions ("small amount of free time"). Semantic unification unifies fuzzy statements with probability values using mass assignment theory. For more information the reader is referred to: *"FRIL - Fuzzy and Evidential Reasoning in AI"*, Baldwin, J. F., Martin, T. P. and Pilsworth, B. W. (1995), Research Studies Press (John Wiley), ISBN 0 86380 159 5.

Implementation details

The user model program 311 and user model UM described above operates in accordance with Flexible, Incremental Learning of User Models (FILUM) - which is based on dynamic support logic programs, and is described in "*Incremental learning of user models - an experimental test bed"*, T. P. Martin, Proceedings of IPMU, Madrid 2000, 1419 - 1426.

Each of the characteristic programs described above is implemented as a class, and the user model UM is considered to have an (interval-valued) probability of belonging to each class according to how well the class behaviour matches the observed behaviour of the user (as described above, with reference to Figures 4 and 5a, 5b, 5c).

This can be described in general terms by the following equations:

C = {c1, c2, ... ck}, where each $c_i$ corresponds to a characteristic (i.e. a characterising program 321, 323, 325 etc) and each class $c_i$ has a set of possible output values

B = {b1, b2, ..., bn}, where bn is the probability of the user behaving according to the characteristic.

User model m predicts the behaviour of a user.

Let $S_n(m \in c_i)$ be the support for the user model *m* belonging to the *i*th class before the nth observation of behaviour. Initially,

$$S_1(m \in c_i) = [0,1]$$

for all classes ci, corresponding to a state of complete ignorance.

Each time an observation is made, every class makes a prediction, and the support for the user model being a member of that class is updated according to the predictive success of the class :

$$S_{n+1}(m \in c_i) = \frac{n \times S_n(m \in C_i) + S(C_i.Behaviour_{n+1} == b_{n+1})}{n+1}$$

where $S(c_i.Behaviour_{n+1} == b_{n+1})$ represents the support for class ci predicting the correct behaviour on this iteration.

Thus the algorithm is

$$S1(m \in ci) = [0, 1], \text{ all i}$$

WHILE another prediction wanted

m.PredictedBehaviour = m.ResolveConflict([$c_i$.Behaviour : S(m $\in$ $c_i$) $\times$ S($c_i$.Behaviour), i = 1...kb])

update S(m $\in$ $c_i$) for each i, according to the observed behaviour
ENDWHILE
where the ResolveConflict method fuses the supports and predictions from the various classes.

The passing of information between the characterising programs 321, 323, 325 etc and caller programs 331, 333 etc., together with interaction and interface with the diary assistant 209 and call database ST is implemented in the Java programming language. It is understood that use of Java is inessential to embodiments of the invention.

The user model UM and user modelling program 311 may be implemented in Fril (Fril[++]) but it is understood that this is inessential to embodiments of the invention.

## EP 1 280 080 A1

**Claims**

1. A method of modelling user behaviour for use in predicting user actions in respect of an event, wherein a user action is one of a predefined set of actions, the method comprising the steps of:

   i. identifying one or more user characteristics;
   ii. creating a user model comprising at least one of the identified user characteristics;
   for the or each identified user characteristic:

      a. receiving data relating to an event;
      b. inputting the received data to one or more rules associated with the identified characteristic;
      c. processing the or each rule, thereby generating an output representative of a user action;

   iii. combining outputs to generate a predicted action associated with the user;
   iv. comparing the predicted action with an observed user action in respect of the event; and
   v. modifying the user model in accordance with a result of the comparison.

2. A method according to claim 1, in which the user model comprises probabilities associated with the or each identified user characteristic, and modifying the user model comprises modifying the probabilities in accordance with the comparison.

3. A method according to claim 1, in which the user model comprises intervals of probabilities associated with the or each identified user characteristic, and modifying the user model comprises modifying the intervals in accordance with the comparison.

4. A method according to any one of the preceding claims, in which, when there are two or more rules associated with a user characteristic, the step of processing rules includes combining output from the said two or more rules in accordance with a predetermined functional relationship so as to generate an output representative of user action in respect of the user characteristic.

5. A method according to any one of the preceding claims, in which an event includes receipt of a phone call from a caller, and the user action is one of answer call, or divert call to voicemail.

6. A method according to claim 5, in which the received data includes data representative of a user's schedule.

7. A method according to claim 6 in which the rules include a rule for determining availability of user during a defined period.

8. A method according to claim 6 or claim 7, in which rules include a rule for determining immediacy of an interaction between caller and user.

9. A method according to claim 8 in which the interaction is one or both of a meeting or/ and a phone call.

10. A method according to any one of claims 5 to 9, in which the received data includes data relating to telephone calls between the caller and user.

11. A method according to claim 10, in which rules include a rule for determining length of telephone calls received from caller during a time period.

12. A method according to claim 10 or claim 11, in which the rules include a rule for determining a number of calls made by the caller to the user during a time period.

13. A method according to any one of the preceding claims, in which the rules utilise fuzzy logic expressions.

14. A method according to any one of claims 1 to 4, in which an event includes receipt of an incoming electronic mail message, and the user action is to prioritise email into one of a plurality of priority categories.

15. A method according to claim 14, in which the user action includes storing email in a storage location representative of one of the plurality of priority categories.

16. A method according to any one of claims 1 to 4, in which an event is scheduling a task into a schedule, and the user action is to insert the task into the schedule as a function of constraints placed upon the task.

17. A method according to any one of claims 1 to 4, in which an event is a broadcast of information, and the user action is to programme a programmable device to record the broadcast information.

18. A method according to any one of the preceding claims, further including the steps of presenting an action to the user in accordance with a predicted action, comparing the presented action with an observed actual user action, and updating the user model in accordance with a result of the comparison.

**Fig 1**

EP 1 280 080 A1

**Fig 2**

EP 1 280 080 A1

EP 1 280 080 A1

Fig 3

S 4.1 — Retrieve information relating to a call

S 4.2 — Process characterising Programs 321, 323, 335

S 4.3 — Process outputs received from characteristic programs

S 4.4 — Retrieve information indicative of actual user response in respect of this call

for each characterising program

S 4.5 — Evaluate performance of predicted output: update prediction measures for each characterising prog.

S 4.6 — Update user model UM in accordance with the prediction measures

**Fig 4**

Interactive program 325:

531 — Request data representative of diary content and calls received from the caller in previous 24 hours

533 — Determine whether user has had recent meeting and/or call with caller

Has user had recent call/meeting with Caller?

NO: Exit

Yes

535 — Calculate value indicative of immediacy of meeting/call

537 — Output value calculated at step 535

**Fig 5c**

Talkative program
321:

| Return "Answer" | 501 |

Fig 5a

Busy program 323:

| Request part of user's diary corresponding to a working period | 511 |

↓

| Determine amount of free time available to the user during the working period (V1) | 513 |

↓

| Translate V1 into relative measure | 515 |

↓

| Compare V1 with previously determined definition of "free time" | 517 |

Is V1 small amount of free time? — Yes →

| Determine type of caller for the current caller | 519 |

↓

| Receive value V2 representative of brevity of calls between caller and user | 521 |

↓

| Transform value V1 into value indicative of user answering phone, on basis of free time | 523 |

↓

| Combine transformed V1 with V2 | 525 |

↓

| Output combination of V1 and V2 | 527 |

| NO: Exit |

Fig 5b

**Fig 6**

**Fig 7**

**Fig 8**

```
        ┌─────────────────────────────┐
        │  Incoming call with caller-ID │
        └──────────────┬──────────────┘
                       │
                       ▼
          N      ╱◇◇◇◇◇◇◇◇◇◇╲      Y
      ┌──────────  Pre-emptively  ──────────┐
      │          ╲  divert call? ╱          │
      │            ╲◇◇◇◇◇◇◇◇◇◇╱            │
      ▼                                     │
┌──────────────────────┐                   │
│ Pass call through to  │                  │
│        user           │                  │
└──────────┬───────────┘                   │
           │                               │
           ▼                               │
     ╱◇◇◇◇◇◇◇◇╲     N                      ▼
    ╱ User able  ╲───────────┐   ┌────────────────────┐
    ╲ to answer  ╱           └──▶│ Pass call to voicemail│
     ╲  call?  ╱                 └──────────┬─────────┘
       ◇◇◇◇◇                                │
         │ Y                                │
         ▼                                  ▼
┌──────────────┐         ┌─────────────────────────┐
│ User takes   │────────▶│ Record details in call   │
│    call      │         │      database ST         │
└──────────────┘         └─────────────────────────┘
```

EP 1 280 080 A1

<table>
<tr><td>European Patent Office</td><td>**EUROPEAN SEARCH REPORT**</td><td>Application Number<br>EP 01 30 6427</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 98 38781 A (NORTHERN TELECOM LTD ;WILL CRAIG ALEXANDER (US))<br>3 September 1998 (1998-09-03)<br>* the whole document * | 1-18 | G06F17/60<br>H04M3/54 |
| X | LASHKARI Y ET AL: "Collaborative interface agents"<br>PROCEEDING OF THE TWELFTH NATIONAL CONFERENCE ON ARTIFICIAL INTELLIGENCE, PROCEEDINGS OF TWELFTH NATIONAL CONFERENCE ON ARTIFICIAL INTELLIGENCE (AAAI-90), SEATTLE, WA, USA, 31 JULY-4 AUG. 1994,<br>pages 444-449 vol.1, XP000603576<br>1994, Cambridge, MA, USA, MIT Press, USA<br>ISBN: 0-262-61102-3<br>* the whole document * | 1-18 | |
| | | | **TECHNICAL FIELDS SEARCHED (Int.Cl.7)**<br>G06F<br>H04M |

The present search report has been drawn up for all claims

| Place of search | Date of completion of the search | Examiner |
|---|---|---|
| THE HAGUE | 11 October 2001 | Suendermann, R |

## ANNEX TO THE EUROPEAN SEARCH REPORT
## ON EUROPEAN PATENT APPLICATION NO.

EP 01 30 6427

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2001

| Patent document cited in search report | Publication date | Patent family member(s) | | Publication date |
|---|---|---|---|---|
| WO 9838781 A | 03-09-1998 | US | 5905789 A | 18-05-1999 |
| | | AU | 6337598 A | 18-09-1998 |
| | | EP | 0962088 A1 | 08-12-1999 |
| | | WO | 9838781 A1 | 03-09-1998 |

For more details about this annex : see Official Journal of the European Patent Office, No. 12/82